# EUROPÄISCHE PATENTSCHRIFT

(11) **EP 0 874 600 B1**
(45) Veröffentlichungstag und Bekanntmachung des Hinweises auf die Patenterteilung: **23.03.2005**
(21) Anmeldenummer: 97944885.9
(22) Anmeldetag: 17.09.1997
(51) Int. Cl.: A61C 17/00, A61C 1/18

(54) **WERKZEUGANTRIEB**
TOOL DRIVE DEVICE
COMMANDE D'OUTIL

(30) Priorität: 05.10.1996 DE 19641120
(43) Veröffentlichungstag der Anmeldung: 04.11.1998
(73) Patentinhaber: Irmer, Joachim, Dr., D-88090 Immenstaad (DE)
(72) Erfinder: SCHMIDT, Günther, D-51420 Bergisch Gladbach (DE)
(74) Vertreter: Engelhardt, Guido, Dipl.-Ing.
(86) Internationale Anmeldenummer: PCT/EP1997/005086
(87) Internationale Veröffentlichungsnummer: WO 1998/015235

(56) Entgegenhaltungen:
- DE-A- 4 209 191
- DE-A- 19 524 839
- DE-B- 1 112 810
- DE-C- 479 300
- DE-C- 896 254

## Beschreibung

Die Erfindung bezieht sich auf eine Vorrichtung zum Antrieb eines Werkzeuges, insbesondere zum Antrieb eines in der Zahnmedizin einsetzbaren Bohrmeisels oder dgl., das mit einem Werkzeugträger fest verbunden ist.

In der Zahnmedizin werden zur Behandlung von Zähnen vielfach Werkzeuge in Form von Bohrern und Schleifscheiben eingesetzt, die durch von Druckmittel beaufschlagte Turbinen um eine Achse rotierend angetrieben werden. Die Werkzeuge werden hierbei mit außerordentlich hohen Drehzahlen angetrieben, so daß die Wärmeentwicklung bei den auszuführenden Arbeiten mitunter erheblich ist. Dies bedingt nicht nur, daß das Werkzeug stets in einem ausreichenden Maße durch zuzuführendes Wasser, das wiederum abgesaugt werden muß, zu kühlen ist, sondern daß auch sehr vorsichtig und sorgfältig gearbeitet werden muß, um Verletzungen von Nervensträngen durch das mit hoher Umfangsgeschwindigkeit arbeitende Werkzeug und eine daraus resultierende große Wärmeentwicklung zu vermeiden. Gewisse Behandlungen erfordern somit einen erheblichen Zeitaufwand, zumal mittels des Werkzeuges nur geringe Kräfte auf das zu behandelnde Objekt ausgeübt werden können, da sonst die Antriebsdrehzahl kurzfristig absinkt. Eine optimale Behandlung von Zähnen läßt sich mit der bekannten Antriebsart demnach oftmals nicht bewerkstelligen.

Das Dokument DE 4 209 191 beschreibt eine Vorrichtung zum Antrieb eines Werkzeuges mit den Merkmale wie offenbart im Oberbegriff von Anspruch 1.

Aufgabe der Erfindung ist es daher, eine Vorrichtung zum Antrieb eines Werkzeuges zu schaffen, die nicht nur einfach in der konstruktiven Ausgestaltung und damit störunanfällig ist, sondern mittels der es vor allem ermöglicht wird, das Werkzeug räumlich und somit dreidimensional anzutreiben, so daß mittels diesem auf einen Zahn bei dessen Behandlung z. B. eine schabende oder eine lineare Bewegung ausgeübt werden kann. Die dabei auftretende Reibungswärme soll, da die Verstellbewegungen der Werkzeugschneiden bei den einzelnen Arbeitsvorgängen klein sind, gering gehalten werden, so daß Verletzungen von Nervensträngen weitgehend ausgeschlossen sind. Auch soll die Vorrichtung einfach zu handhaben und vielseitig einsetzbar sein.

Gemäß der Erfindung ist die Vorrichtung zum Antrieb eines Werkzeuges, das mit einem Werkzeugträger verbunden ist, wie beansprucht in Anspruch 1.

Zweckmäßig ist es hierbei, zur Übertragung der taumelnden Verstellbewegungen auf den Werkzeugträger ein diesen aufnehmendes Kopfstück vorzusehen, das über mindestens zwei außermittig auf dieses einwirkende Bowdenzüge oder hydraulische oder mechanische Gestänge mit dem Verstellglied des zweiten Linearmotors trieblich verbunden ist, und das Kopfstück an einem kalottenartig ausgebildeten Lager begrenzt verschwenkbar abzustützen, das in einer mit einem die Linearmotore aufnehmenden Gehäuse verbundenen Kappe auf der diesen zugewandten Innenmantelfläche angeordnet ist, wobei die Verstellglieder der Bowdenzüge bzw. der Gestänge mit ihren freien Enden an einem kreuzartig ausgebildeten Halteglied oder an einer Scheibe befestigt sein sollte, das fest mit dem Kopfstück verbunden ist, und der Werkzeugträger sollte axial verschiebbar in dem Kopfstück eingesetzt und über einen Bowdenzug oder ein hydraulisches oder mechanisches Gestänge mit dem Verstellglied des ersten Linearmotors trieblich verbunden sein.

Angebracht ist es des weiteren, den ersten Linearmotor durch einen Hubmagneten oder einen aus einem in einen Zylinder eingesetzten und von einem Druckmedium ein- oder beidseitg beaufschlagbaren Verstellkolben bestehenden Axialmotor zu bilden, dessen Anker bzw. Kolbenstange mit dem Werkzeugträger trieblich verbunden ist. Dem Anker bzw. der Kolbenstange des ersten Linearmotors sollte eine aus einem Faltenbalg, einer Schraubenfeder, einer Membran, einer Blattfeder oder dgl. bestehenden Rückstellfeder zugeordnet sein.

Der zweite Linearmotor kann in einfacher Ausgestaltung durch einen aus mehreren umlaufend erregbaren Magnetspulen und einem als Ankerscheibe ausgebildeten Verstellglied bestehenden Elektromotor, an dessen Verstellglied die Verstellglieder der Bowdenzüge bzw. der Gestänge befestigt sind, oder durch eine Mehrzahl von durch ein Medium betätigbare Axialmotoren gebildet sein, es ist aber auch möglich, bei vier auf das Kopfstück einwirkenden Bowdenzügen bzw. Gestängen den zweiten Linearmotor durch zwei jeweils zweiteilige Magnetspulen und diesen zugeordneten kippbar gehaltenen Anker zu bilden, die um 90° gegeneinander versetzt angeordnet und deren jeweils mit zwei Bowdenzügen verbundene Anker miteinander gekoppelt sind. Die Anker des zweiten Linearmotors sollte hierbei jeweils mittels eines Kreuzfedergelenkes in dem Gehäuse aufgehängt sein und einer der den Magnetspulen zugeordneten Anker sollte mit einem Federelement, z. B. in Form eines Faltenbalges,versehen sein.

Wird eine Vorrichtung zum Antrieb eines Werkzeuges gemäß der Erfindung ausgebildet, so ist es möglich, dieses sehr unterschiedlich anzutreiben und somit auch sehr unterschiedliche Arbeiten durchzuführen, ohne daß dabei die Gefahr einer zu starken Erwärmung an einem Zahn durch Reibungswärme besteht. Die beiden in der Vorrichtung vorgesehenen Linearmotore können nämlich unabhängig voneinander oder zusammen in Betrieb genommen werden, so daß das Werkzeug in dessen Achsrichtung oder taumelnd bzw. kreisend anzutreiben ist, wobei auch die Hub- und Schwenkbewegungen sowohl in ihrer Frequenz als auch in ihrer Intensität den jeweiligen Einsatzzwecken leicht anzupassen sind. Über eine elektrische Steuerung können die Linearmotore demnach problemlos in entsprechender Weise verstellt und das Werkzeug in den drei Achsen bewegt werden.

Des weiteren ist von Vorteil, daß dem Werkzeug auch eine hohe Antriebsenergie zugeführt werden kann. Ein Zahn kann demnach nicht nur mit Hilfe eines Meißels, sondern auch eines Schälwerkzeuges bearbeitet werden. Und sollten Behandlungen im Bereich eines Nervenstranges vorzunehmen sein, wird dieser u. U. in sehr kurzer Zeit durchtrennt, ein Schmerzempfinden entsteht in diesem Fall bei einem Patienten nicht, da eine Erhitzung nicht auftritt. Mit geringem Bauaufwand wird demnach eine Vorrichtung geschaffen, die in sehr vielseitiger Weise, insbesondere in der Zahnmedizin, vorteilhaft eingesetzbar ist.

In der Zeichnung sind einige Ausführungsbeispiele einer Vorrichtung zum Antrieb eines Werkzeuges dargestellt, die nachfolgend im einzelnen erläutert sind. Hierbei zeigt:
- Figur 1: die mit zwei Linearmotoren versehene Vorrichtung, in einem Axialschnitt,
- Figur 2: eine vergrößerte Darstellung des Kopfstückes der Vorrichtung nach Figur 1,
- Figur 3: einen Schnitt nach der Linie III - III der Figur 1,
- Figur 4: einen Schnitt nach der Linie IV - IV der Figur 1,
- Figur 5: eine andersartige Ausgestaltung des dem ersten Linearmotor der Vorrichtung nach Figur 1 zugeordneten Rückstellgliedes,
- Figur 6: eine Ausführungsvariante der Vorrichtung nach Figur 1,
- Figur 7: einen Ausschnitt aus Figur 6 in einer um 90° vergrößerten Darstellung,
- Figur 8: einen Schnitt nach der Linie VIII - VIII der Figur 7,
- Figur 9: einen Schnitt nach der Linie IX - IX der Figur 7,
- Figur 10: einen Schnitt nach der Linie X - X der Figur 7,
- Figur 11: die Vorrichtung nach Figur 1 mit Hydraulikmotore als Linearmotore,
und
- Figur 12: einen Schnitt nach der Linie XII - XII der Figur 11.

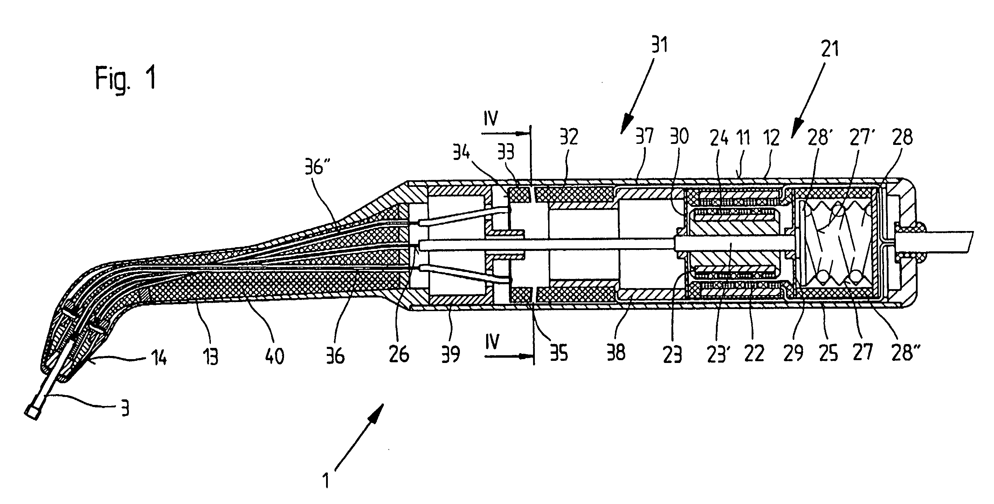

Die in den Figuren 1, 6 und 11 dargestellte und mit 1 bzw. 1' bzw. 1" bezeichnete Vorrichtung dient zum Antrieb eines insbesondere in der Zahnmedizin einsetzbaren Werkzeuges 2, das auswechselbar an einem Werkzeugträger 3 befestigt ist. Zum Antrieb des Werkzeugträgers 3 sind hierbei zwei in einem aus einem rohrförmigen Mantel 12 bestehenden Gehäuse 11 eingebaute Linearmotore 21 und 31 vorgesehen, die trieblich mit dem Werkzeugträger 3 gekoppelt sind. Mit Hilfe der Linearmotore 21 und/oder 31 ist der Werkzeugträger 3 in axialer Richtung als auch taumelnd und somit kreisend antreibbar, so daß an einem Zahn mittels des Werkzeuges 2 sowohl Meißel- als auch Schälarbeiten auszuführen sind.

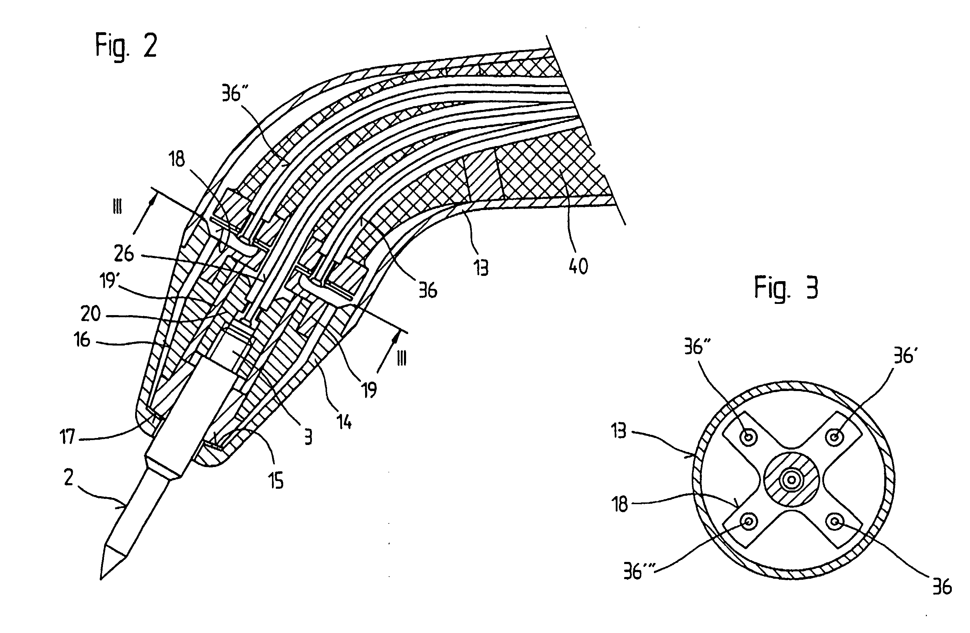

Um den Werkzeugträger 3 drei-dimensional antreiben zu können, ist dieser, wie dies insbesondere der Figur 2 zu entnehmen ist, in einem Kopfstück 16 eingesetzt, das in einer über ein Zwischenstück 13 mit dem Gehäuse 11 verbundenen Kappe 14 angeordnet ist. Die Kappe 14 weist auf der dem Zwischenstück 13 zugekehrten Innenseite eine kalottenförmig ausgebildete Lagerfläche 15 auf und das Kopfstück 16 ist mit einer entsprechenden Gegenfläche 17 ausgestattet, so daß das Kopfstück 16 eine taumelnde Bewegung, entsprechend dem vorgegebenen Freiraum in der Kappe 13, ausführen kann.

Bei der Vorrichtung 1 nach Figur 1 ist der erste Linearmotor 21 als Elektromotor ausgebildet, der Magnetspulen 22, denen elektrische Energie über Leitungen 25 zuführbar ist, sowie in einem als Anker 23 ausgebildeten Verstellglied eingesetzte Permanentmagnete 24 aufweist. Eine in den Anker 23 eingesetzte Zugstange 23' ist mit einem Bowdenzug 26 verbunden, der mit seinem freien Ende unmittelbar auf den Werkzeugträger 3 einwirkt. Die durch wechselweise Erregung der Magnetspulen 22 erzeugten axialen Verstellbewegungen des Ankers 23 werden somit auf den Werkzeugträger 3 und von diesem auf das Werkzeug 2 übertragen, so daß mit diesem bei Inbetriebnahme des Linearmotors 21 z. B. Meißelarbeiten ausgeführt werden können.

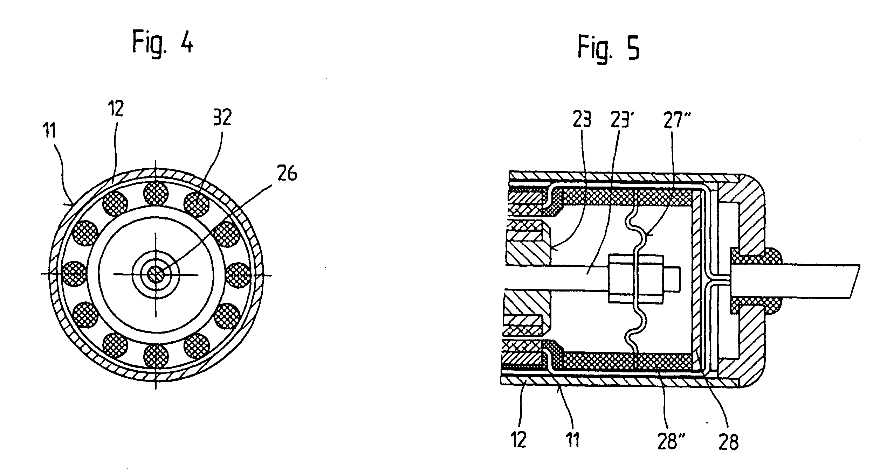

Zum Ausgleich von Schwingungen ist dem Anker 23 des weiteren ein Ausgleichs- und Rückstellelement in Form eines Faltenbalges 27 zugeordnet, der an einer ortsfesten Platte 28 und einer mit der Zugstange 23', die in beidseits der Magnetspulen 22 angeordnete Scheiben 29 und 30 verschiebbar geführt ist, verbundene Platte 28' abgestützt ist. Als Ausgleichs- und Rückstellelement kann aber auch, wie dies in Figur 1 strichpunktiert eingezeichnet ist, eine Druckfeder 27' oder gemäß Figur 5 eine in einer mit der Platte 28 fest verbundenen Hülse 28" eingespannte Membran 27" vorgesehen sein.

Der zweite Linearmotor 31 besteht aus einer Mehrzahl von in dem Mantel 12 kreisförmig eingesetzten Magnetspulen 32 sowie einem Verstellglied 33 in Form von den Magnetspulen 32 zugeordneten an einer federnden Scheibe 34 angebrachten Magneten 35. An der Scheibe 34 sind vier Bowdenzüge 36, 36', 36" und 36"' befestigt, die mit ihren freien Enden mit einem kreuzförmig ausgebildeten Halteglied 18 verbunden sind. Werden die Magnetspulen 32, die über Leitungen 37 an eine Stromquelle angeschlossen sind, umlaufend erregt, so werden die Magnete 35 von diesen angezogen, so daß die Bowdenzüge 36, 36', 36" und 36"' ihre Lage verändern. Diese Lageänderungen werden auf das Halteglied 18 und von diesem über ein hutförmiges Zwischenglied 19 auf das Kopfstück 16 übertragen, das somit eine taumelnden Verstellbewergung ausführt.

In dem Kopfstück 16 ist ferner eine Hülse 19' eingesetzt, in der ein Stellglied 20, in das der Werkzeugträger 3 eingeschraubt ist, verschiebbar geführt ist. Die linearen Verstellbewegungen des Werkzeugträgers 3, die von dem ersten Linearmotor 21 bewerkstelligt werden, werden somit, sofern auch der zweite Linearmotor 31 sich in Betrieb befindet, von den Taumelbewegungen des Kopftstückes 16 überlagert, so daß das Werkzeug 2 in dem vorgesehenen Arbeitsbereich an jeder Stelle eines vorgegebenen Raumes wirksam sein kann.

Die Magnetspulen 32 des zweiten Lineramotors 31 sind mittels eines in das Gehäuse 11 eingesetzten Trägers 38 gehalten, des weiteren ist zur Halterung der Bowdenzüge 36, 36', 36" und 36"' ein Träger 39 vorgesehen, und in das Zwischenstück 13 ist eine Kunststoff-Füllung 40 eingebracht, so daß die Bowdenzüge 36, 36', 36" und 36"' unverrückbar abgestützt sind.

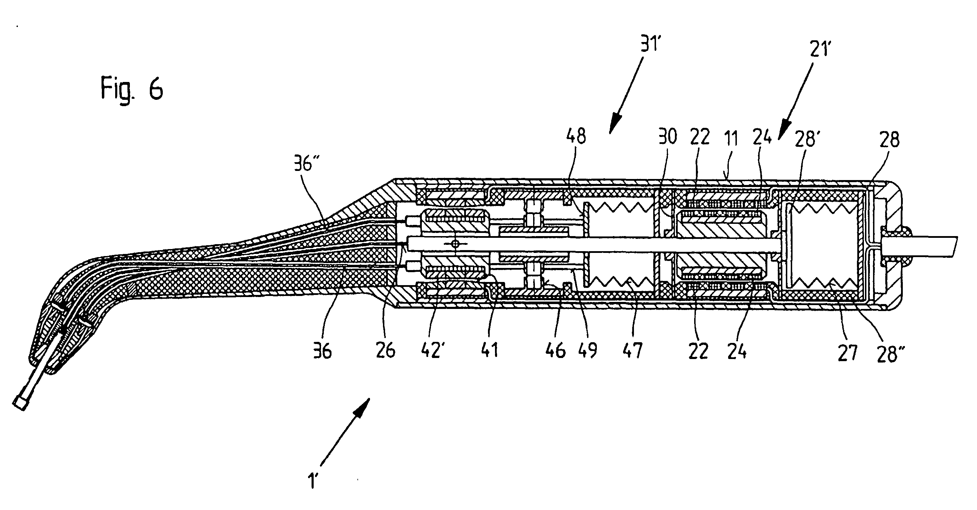

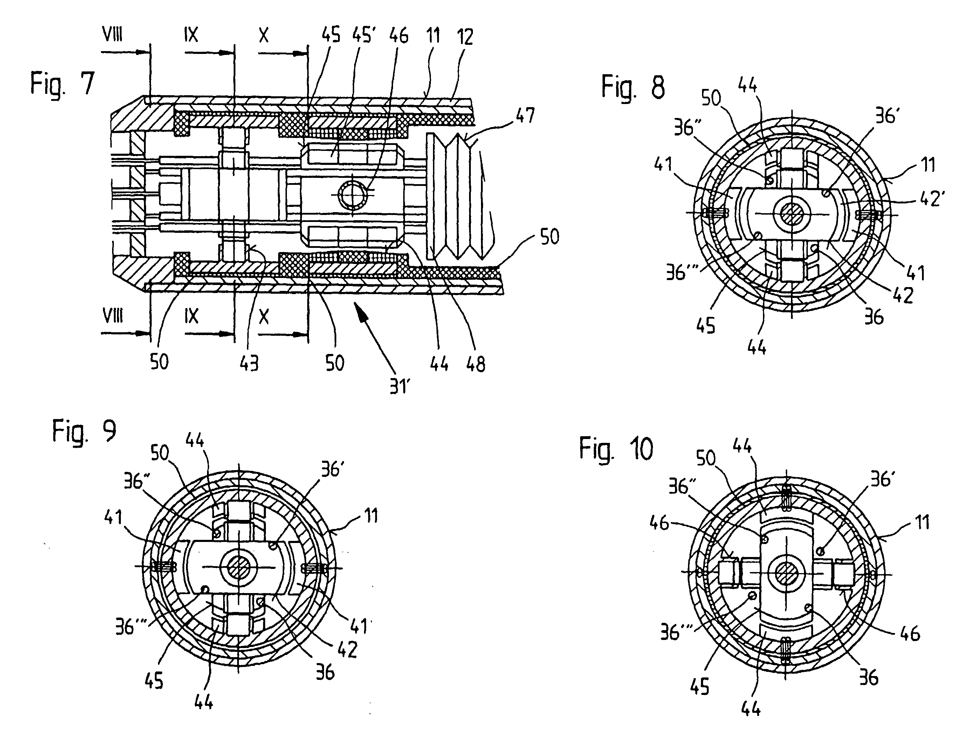

Bei der Ausführungsvariante der Vorrichtung 1' nach Figur 6 weist der zweite Linearmotor 31' zwei mit axialem Abstand zueinander in dem Gehäuse 11 angeordnete Magnetspulen 41 und 44 sowie mit diesen zusammenwirkende Anker 42 und 45 auf, die, wie dies insbesondere auch den Figuren 7, 8, 9 und 10 zu entnehmen ist, mittels Kreuzfedergelenken 43 bzw. 46 kippbar abgestützt sind. Durch wechselweises Erregen der zweiteiligen Magnetspulen 41 bzw. 44 werden somit die mit Permanentmagneten 42' bzw. 45' bestückten Anker 42 und/oder 45 gekippt, so daß dadurch eine Lageänderung der Bowdenzüge 36, 36', 36" und 36"' bewerkstelligt und das Kopfstück 16 in eine taumelnde Bewegung versetzt wird.

Die Magnetspulen 41, 44 sowie die Anker 42, 45 sind hierbei um 90° zueinander versetzt angeordnet, auch ist den Ankern 42 und 45 ein Ausgleichs- und Rückstellglied in Form eines Faltenbalges 47 zugeordnet, der mit einem Ende an der Scheibe 30 und mit dem anderen Ende an einer Platte 48 befestigt ist, an dem die Anker 42 und 45 mittels Stößel 49 angelenkt sind. Des weiteren sind die Bauteile der Linearmotore 21' und 31' teilweise in einer Isolierung 50 gehalten.

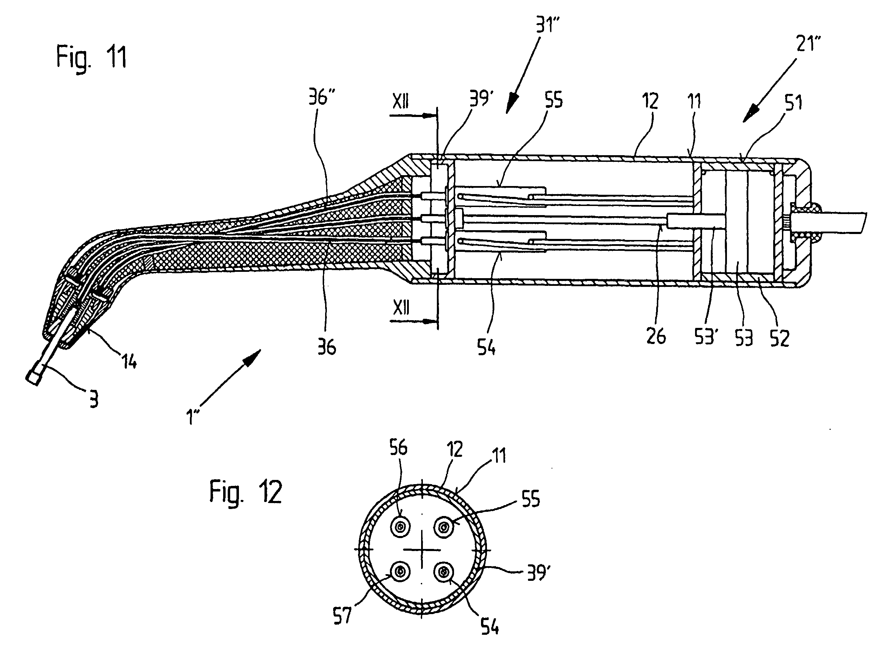

Bei der Ausgestaltung der Vorrichtung 1" nach Figur 11 sind die als Linearmotore 21" und 31" jeweils Hydraulikmotore 51 bzw. 54, 55, 56 und 57 vorgesehen, die über den Bowdenzug 26 unmittelbar auf den Werkzeugträger 3 bzw. über die Bowdenzüge 36, 36', 36" und 36"' auf das Kopfstück 16 einwirken. Der Hydraulikmotor 51 besteht hierbei aus einem in das Gehäuse 11 eingesetzten Zylinder 52 und einem in diesem verschiebbar geführten Kolben 53, an dessen Kolbenstange 53' der Bowdenzug 26 angelenkt ist. In gleicher Weise sind die Hydraulikmotoren 54, 55, 56 und 57, die mittels eines Trägers 39' gehalten sind, ausgebildet.

## Patentansprüche

1. Vorrichtung (1) zum Antrieb eines Werkzeuges (2), insbesondere zum Antrieb eines in der Zahnmedizin einsetzbaren Bohrmeißels oder dgl., das mit einem Werkzeugträger (3) fest verbunden ist, wobei der Werkzeugträger (3) mit einem ersten Linearmotor (21) und einem zweiten von diesem getrennt betätigbaren Linearmotor (31) in Triebverbindung steht, der Werkzeugträger (3) durch den ersten Linearmotor (21) translatorisch und durch den zweiten Linearmotor (31) taumelnd antreibbar ist und die translatorischen und taumelnden Verstellbewegungen der Linearmotore (21, 31) einzeln oder gemeinsam auf den Werkzeugträger übertragbar bzw. auf diesen überlagerbar sind,
**dadurch gekennzeichnet,**
**dass** zur Übertragung der translatorischen Bewegung des ersten Linearmotors (21) dieser mit einer axial verstellbaren Zugstange (23') als Verstellglied versehen ist, die über einen Bowdenzug (26) oder ein hydraulisches bzw. mechanisches Gestänge mit dem Werkzeugträger trieblich gekoppelt ist, und dass zur Übertragung der taumelnden Verstellbewegungen des zweiten Linearmotors (31) auf den Werkzeugträger (3) ein diesen aufnehmendes Kopfstück (16) vorgesehen ist, das über mindestens zwei außermittig auf dieses einwirkende Bowdenzüge (36, 36', 36", 36"') oder hydraulische oder mechanische Gestänge mit dem Verstellglied (33) des zweiten Linearmotors (31) in Triebverbindung steht.

2. Vorrichtung nach Anspruch 1,
**dadurch gekennzeichnet,**
**dass** die beiden Linearmotore (21, 31) gemeinsam in einem vorzugsweise rohrförmig ausgebildeten Gehäuse (11) angeordnet sind.

3. Vorrichtung nach Anspruch 1 oder 2,
**dadurch gekennzeichnet,**
**dass** das Kopfstück (16) an einem kalottenartig ausgebildeten Lager (15) begrenzt verschwenkbar abgestützt ist, das in einer mit dem die Linearmotore (21, 31) aufnehmenden Gehäuse (11) verbundenen Kappe (14) auf der diesen zugewandten Innenmantelfläche angeordnet ist.

4. Vorrichtung nach Anspruch 3,
**dadurch gekennzeichnet,**
**dass** die Verstellglieder der Bowdenzüge (36, 36', 36", 36"') bzw. der Gestänge mit ihren freien Enden an einem kreuzartig ausgebildeten Halteglied (18) oder einer Scheibe befestigt sind, das fest mit dem Kopfstück (16) verbunden ist.

5. Vorrichtung nach einem oder mehreren der
Ansprüche 1 bis 4,
**dadurch gekennzeichnet,**
**dass** der Werkzeugträger (3) axial verschiebbar in dem Kopfstück (16) eingesetzt ist.

6. Vorrichtung nach einem oder mehreren der
Ansprüche 1 bis 5,
**dadurch gekennzeichnet,**
**daß** der erste Linearmotor (21 bzw. 21") durch einen Hubmagneten (22, 22', 24, 24') oder einen aus einem in einen Zylinder (52) eingesetzten und von einem Druckmedium ein- oder beidseitg beaufschlagbaren Verstellkolben (53) bestehenden Axialmotor (51) gebildet ist, dessen Anker (23) bzw. Kolbenstange (53) mit dem Werkzeugträger (3) trieblich verbunden ist.

7. Vorrichtung nach Anspruch 6,
**dadurch gekennzeichnet,**
**daß** dem Anker (23) des ersten Linearmotors (21) eine aus einem Faltenbalg (27), einer Schraubenfeder (27'), einer Membran (27"), Blattfedern oder dgl, bestehenden Rückstellfeder zugeordnet ist.

8. Vorrichtung nach einem oder mehrerer der
Ansprüche 1 bis 7,
**dadurch gekennzeichnet,**
**daß** der zweite Linearmotor (31) durch einen aus mehreren umlaufend erregbaren Magnetspulen (32) und einem als Ankerscheibe ausgebildeten Verstellglied (33) bestehenden Elektromotor, an dessen Verstellglied (33) die Verstellglieder der Bowdenzüge (36, 36', 36", 36"') bzw. der Gestänge befestigt sind, oder durch eine Mehrzahl von durch ein Medium betätigbare Axialmotoren (54, 55, 56, 57) gebildet ist.

9. Vorrichtung nach einem oder mehrerer der
Ansprüche 1 bis 7,
**dadurch gekennzeichnet,**
**daß** bei vier auf das Kopfstück (16) einwirkenden Bowdenzügen (36, 36', 36", 36"') oder Gestängen der zweite Linearmotor (31') durch zwei jeweils zweiteilige Magnetspulen (41, 44) und diesen zugeordneten kippbar gehaltene Anker (42, 45) gebildet ist, die um 90° gegeneinander versetzt angeordnet und.deren jeweils mit zwei Bowdenzügen (36, 36', 36", 36"') bzw. Gestängen verbundene Anker (42, 45) miteinander gekoppelt sind.

10. Vorrichtung nach Anspruch 9,
**dadurch gekennzeichnet,**
**daß** die Anker (42, 45) des zweiten Linearmotors (31') jeweils mittels eines Kreuzfedergelenkes (43, 46) in dem Gehäuse (11) aufgehängt sind.

11. Vorrichtung nach Anspruch 9 oder 10,
**dadurch gekennzeichnet,**
**daß** einer der den Magnetspulen (41) zugeordneter Anker (42) mit einem Federelement (47), z. B. in Form eines Faltenbalges, versehen ist.

## Claims

1. A device (1) for driving a tool (2), in particular for driving a drilling bit or the like that can be used in dentistry, that is in a fixed connection with a tool carrier (3) in which case the tool carrier (3) is in a driven connection with a first linear motor (21) and a second linear motor (31) that can be actuated separately from the first, the tool carrier (3) can be driven by the first linear motor (21) in a translational movement and in a tumbling movement by the second linear motor (31), and the translational and tumbling movements of the linear motors (21, 31) can be transferred or superimposed onto the tool carrier individually or jointly.
**characterized in that**,
to transmit the translational movement of the first linear motor (21), the motor in question is provided with an axially adjustable pull rod (23') as an adjusting element, the pull rod (23') being in a driven connection with the tool carrier by means of a Bowden cable (26) or a hydraulic/mechanical linkage, and that a head piece (16) holding the tool carrier (3) is provided to transmit the tumbling adjustment movements of the second linear motor (31) onto the tool carrier (3), the head piece (16) being in a driven connection with the adjusting element (33) of the second linear motor (31) by means of at least two Bowden cables (36, 36', 36", 36"') acting off-center on the head piece (16) or a hydraulic or mechanical linkage.

2. The device in accordance with Claim 1,
**characterized in that**
the two linear motors (21, 31) are arranged jointly in a housing (11) that, in a preferred embodiment, is tubular in shape.

3. The device in accordance with Claim 1 or 2,
**characterized in that**
the head piece (16) is supported on a dome-shaped bearing (15) with a limited pivoting range, the bearing (15) being arranged in a cap (14) connected to the housing (11) that accommodates the linear motors (21, 31) on the internal jacket surface facing the motors.

4. The device in accordance with Claim 3,
**characterized in that**
the adjusting elements of the Bowden cables (36, 36', 36", 36"') or the linkage have their free ends attached to a cross-shaped holding element (18) or a disk that is in a fixed connection with the head piece (16).

5. The device in accordance with one or more of Claims 1 to 4,
**characterized in that**
the tool carrier (3) is inserted in the head piece (16) in an axially, movable arrangement.

6. The device in accordance with one or more of Claims 1 to 5,
**characterized in that**
the first linear motor (21 or 21 ") is formed by a lifting magnet (22, 22', 24, 24') or by an adjusting piston (53) inserted in a cylinder (52) in such a way that a pressurized medium can act on it from one or both sides, the armature (23) or piston rod (53) of which is in a driven connection with the tool carrier (3).

7. The device in accordance with Claim 6,
**characterised in that**,
the armature (23) of the first linear motor (21) has a return spring assigned to it, the return spring comprising a bellows (27), a coil spring (27'), a diaphragm (27"), leaf springs or the like.

8. The device in accordance with one or more of Claims 1 to 7,
**characterised in that**,
the second linear motor (31) is formed by an electric motor comprising several circumferential excitable solenoid coils (32) and an adjusting element (33) formed as an armature disk, with the adjusting element (33) having the adjusting elements of the Bowden cables (36, 36', 36", 36"') or the linkage attached to it, or by a plurality of axial motors (54, 55, 56, 57) that can be actuated by a medium.

9. The device in accordance with one or more of Claims 1 to 7,
**characterised in that**,
when there are four Bowden cables (36, 36', 36", 36"') or linkages acting on the head piece (16), the second linear motor (31') is formed by two solenoid coils (41, 44) that are each in two parts and tilting armatures (42, 45) assigned to the coils (41, 44) that are arranged offset at 90° to one another and the armatures (42, 45) of the coils (41, 44) are connected together in each case using two Bowden cables (36, 36', 36", 36"') or linkages.

10. The device in accordance Claim 9,
**characterised in that**,
the armatures (42, 45) of the second linear motor (31) are each hooked into the housing (11) by means of a cross-spring linkage (43, 46).

11. The device in accordance with Claim 9 or 10,
**characterised in that**,
one of the armatures (42) assigned to the magnetic coils (41) is provided with a spring element (47), for example in the form of a bellows.

## Revendications

1. Dispositif (1 ) d'entraînement d'un outil (2), en particulier d'un outil à aléser ou d'un outil similaire, tel qu'il est utilisé dans la médecine dentale, lié rigidement à un porte-outil (3), le porte-outil (3) étant entraîné par un premier moteur linéaire (21) et par un deuxième moteur linéaire (31) pouvant être actionné séparément, où le porte-outil (3) est entraîné de façon translatoire par le premier moteur linéaire (21) et en nutation par le deuxième moteur linéaire (31 ) et où les déplacements de réglage translatoires et en nutation des moteurs linéaires (21, 31) se laissent transmettre ou superposer individuellement ou ensemble sur le porte-outil,
**caractérisé en ce que**
pour la transmission du mouvement translatoire du premier moteur linéaire (21), celui-ci est mini d'un membre de réglage sous la forme d'une tige de traction (23') axialement réglable et accouplée par un câble Bowden (26) ou par une tringlerie hydraulique ou mécanique avec le porte-outil, et que, pour la transmission du mouvement en nutation du deuxième moteur linéaire (31) sur le porte-outil (3), il est prévu un élément de tête (16) qui le reçoit et qui est accouplé par au moins deux câbles Bowden (36, 36', 36", 36"') agissant de manière excentrée sur l'élément de tête, ou par une tringlerie hydraulique ou mécanique, au membre de réglage (33) du deuxième moteur linéaire (31).

2. Dispositif d'après la revendication 1,
**caractérisé en ce que**
les deux moteurs linéaires (21, 31) sont logés ensemble dans les boîtier (11) conçu de préférence tubulaire.

3. Dispositif d'après la revendication 1 ou 2,
**caractérisé en ce que**
l'élément de tête (16) s'appuie de manière pivotante et limitée, sur un palier (15) sous forme d'une calotte, disposé dans un capot (14) lié au boîtier (11 ) des moteurs linéaires (21, 31) sur l'enveloppe intérieure donnant vers les moteurs.

4. Dispositif d'après la revendication 3,
**caractérisé en ce que**
les extrémités libres des membres de réglage des câbles Bowden (36, 36', 36", 36"') ou des tringleries sont raccordées à un élément de retient cruciforme (18) ou à une rondelle liés à l'élément de tête (16).

5. Dispositif d'après une ou plusieurs des revendications 1 à 4,
**caractérisé en ce que**
le porte-outil (3) est inséré de manière réglable en direction axiale, dans l'élément de tête (16).

6. Dispositif d'après une ou plusieurs des revendications 1 à 5,
**caractérisé en ce que**
le premier moteur linéaire (21 ou 21") est formé par un solénoïde (22, 22', 24, 24') ou par un moteur axial (51) consistant d'un piston de réglage (53) logé dans un cylindre (52) et soumis d'un ou des deux côtés à un milieu de pression, dont l'induit (23) ou la tige de piston (53) sont accouplés au porte-outil (3).

7. Dispositif d'après la revendication 6,
**caractérisé en ce que**,
à l'induit (23) du premier moteur linéaire (21), il est assigné un ressort de rappel formé par un soufflet à plis (27), un ressort hélicoïdal (27'), un diaphragme (27"), des ressorts à lames etc.

8. Dispositif d'après une ou plusieurs des revendications 1 à 7,
**caractérisé en ce que**
le deuxième moteur linéaire (31) est formé par un moteur électrique consistant de plusieurs bobines magnétiques excitables en rotation (32) et par un membre réglable (33) sous la forme d'un disque, auquel sont raccordés les membres de réglage des câbles Bowden (36, 36', 36", 36"') ou des tringleries, ou par plusieurs moteurs axiaux (54, 55, 56, 57) actionnés par un milieu.

9. Dispositif d'après une ou plusieurs des revendications 1 à 7,
**caractérisé en ce que**,
en cas de 4 câbles Bowden (36, 36', 36", 36"') ou tringleries agissant sur l'élément de tête (16), le deuxième moteur linéaire (31') est formé par deux bobines magnétiques respectivement divisées (41, 44) et par deux induits pivotants (42, 45) qui leurs sont assignés, disposées décalées de 90° l'une par rapport à l'autre, et dont les induits (42, 45) liés par respectivement deux câbles Bowden (36, 36', 36", 36"') ou tringleries sont accouplés ensemble.

10. Dispositif d'après la revendication 9,
**caractérisé en ce que**
les induits (42, 45) du deuxième moteur linéaire (31') sont montés respectivement au moyen d'un pivot à lames flexibles (43, 46) dans le boîtier (11).

11. Dispositif d'après la revendication 9 ou 10,
**caractérisé en ce**
**qu'**un des induits (42) assignés aux bobines magnétiques (41) est muni d'un élément élastique (47), conçu p.ex. sous la forme d'un soufflet à plis.
